# EUROPÄISCHE PATENTSCHRIFT

(11) **EP 2 206 577 B1**
(45) Veröffentlichungstag und Bekanntmachung des Hinweises auf die Patenterteilung: **09.03.2011**
(21) Anmeldenummer: 10000120.5
(22) Anmeldetag: 08.01.2010
(51) Int. Cl.: B23P 13/02, B23P 15/00, B23C 3/18, F01D 5/34

(54) **Verfahren zur Herstellung der Schaufelspitzen von in BLISK-Bauweise gefertigten Laufrädern**
Method for producing the blade tips of discs produced in a BLISK design
Procédé de fabrication des aubes à talon de roues porteuses en BLISK

(30) Priorität: 13.01.2009 DE 102009004791
(43) Veröffentlichungstag der Anmeldung: 14.07.2010
(73) Patentinhaber: Rolls-Royce Deutschland Ltd & Co KG, 15827 Blankenfelde-Mahlow (DE)
(72) Erfinder: Zhu, Leping, Dr., 64291 Darmstadt (DE); Riedel, Gregor, 63654 Büdingen (DE)
(74) Vertreter: Weber, Joachim

(56) Entgegenhaltungen:
- EP-A1- 1 990 131
- DE-A1- 2 500 446

## Beschreibung

Die Erfindung betrifft ein Verfahren zur Herstellung der Schaufelspitzen von in BLISK-Bauweise gefertigten Laufrädern, insbesondere von mehrstufigen Verdichterrotoren für Fluggasturbinen. Ein solches Verfahren ist aus der EP 1 990 131 A1 bekannt.

Die Herstellung der Schaufelspitzen von konventionell gefertigten Laufrädern mit an den Rotorscheiben montierten Schaufeln erfolgt bekanntermaßen durch Schleifen während der Rotation des Rotors mit hoher Geschwindigkeit, bei der die Schaufeln aufgrund der Fliehkraft nach außen gedrückt und damit gedämpft an der Schleifscheibe positioniert werden.

Die Anwendung Schaufelspitzenschleifens bei in Integralbauweise ausgeführten Rotoren oder Rotortrommeln von Kompressoren für Fluggasturbinen bereitet insofern Schwierigkeiten, als die Schaufeln durch auftretende Schaufelschwingungen hoch belastet werden und sich zudem unter der Wirkung der Schleifscheibenkraft entwinden können. Dadurch werden die Maßgenauigkeit und die Lebensdauer der Schaufeln verringert. Zur Vermeidung der durch das Schwingen der BLISK-Schaufeln bedingten Nachteile, werden zwischen den Schaufeln elastische Dämpfungselemente montiert oder die Schaufeln werden mit Elastomerelementen umgeben oder der Raum zwischen den Schaufeln wird vergossen. Abgesehen von dem mit derartigen schwingungsdämpfenden Maßnahmen verbundenen hohen Arbeitsaufwand kann es nach dem Entspannen der während des Schleifens verspannten Schaufeln zu unerwünschten Form- und Maßabweichungen kommen.

Der Erfindung liegt daher die Aufgabe zugrunde, ein Verfahren zum Bearbeiten der Schaufelspitzen von in Blisk-Bauweise hergestellten Rotoren für die Verdichter von Gasturbinentriebwerken anzugeben, das ohne aufwendige Dämpfungsmaßnahmen eine hohe Maßgenauigkeit und die Ausbildung einer definierten Spitzengeometrie der Schaufeln gewährleistet.

Erfindungsgemäß wird die Aufgabe mit einem Verfahren gemäß den Merkmalen des Patentanspruchs 1 gelöst. Zweckmäßige Ausgestaltungen der Erfindung sind Gegenstand der Unteransprüche.

Bei dem erfindungsgemäßen Verfahren zur Fertigbearbeitung der Schaufelspitzen von in BLISK-Bauweise hergestellten Laufrädern, insbesondere von mehrstufigen Verdichterrotoren (Verdichtertrommeln) für Fluggasturbinen oder auch Industriegasturbinen besteht der Grundgedanke der Erfindung darin, dass das in einer Aufspannvorrichtung aufgespannte Laufrad oder auch ein mehrstufiger Verdichterrotor - Schaufel für Schaufel und Stufe für Stufe - an den Schaufelspitzen mit einem Konusfräser bearbeitet wird, dessen Schneide tangential zur Außenmantelfläche des Laufrades oder Verdichterrotors ausgerichtet ist und an der Schaufelspitze im Wesentlichen entlang von deren Mittellinie geführt ist, wobei die Schnittkraft senkrecht zur Werkzeugachse und in die steifeste Richtung der Schaufel, d.h. der Mittellinie des Schaufelquerschnitts und der von der Mittellinie ausgehenden senkrechten Achse, eingeleitet wird. Aufgrund der Schneidwirkung und Krafteinleitung des Konusfräsers an der Schaufelspitze können, ohne dass die betreffende Schaufel in Schwingungen gerät und demzufolge ohne die zeit- und kostenaufwendige Montage und Demontage von Dämpfungsmitteln und eine dadurch gegebenenfalls bedingte Verformung der Schaufeln und daraus folgende Maßabweichungen, Schaufelspitzen mit einer geometrisch genau bestimmten Schneide erzeugt werden

Die Schaufelgeometrie kann in Abhängigkeit von der Schaufeldicke und dem Verlauf der Werkzeugbahn in Bezug auf die Mittellinie linear, rampen- oder facettenförmig ausgebildet werden.

In Ausgestaltung der Erfindung kann der Spitzenwinkel des Konusfräsers zwischen 30° und 150° und dessen Drallwinkel zwischen 0° Und 60° betragen.

In weiterer Ausbildung der Erfindung wird die Schaufelspitzenbearbeitung unter Verwendung eines Kühlschmierstoffs durchgeführt.

In weiterer Ausgestaltung des erfindungsgemäßen Verfahrens werden nach dem Aufspannen des Laufrades oder Verdichterrotors mit einer Messvorrichtung zunächst die Position und Nulllage des Werkstückes ermittelt und anschließend alle Schaufelspitzen nacheinander zunächst vorgefräst und nach einer anschließenden erneuten Messung und Ermittlung der Korrekturwerte wird ein Schlichtfräsen der Schaufelspitzen und danach eine Kontrollmessung durchgeführt.

In weiterer Ausgestaltung der Erfindung wird nach dem Aufspannen des Laufrades oder Verdichterrotors mit einer Messvorrichtung zunächst die Position und Nulllage des Werkstückes ermittelt und anschließend eine Schaufelspitze vorgefräst und dieselbe Schaufelspitze nach Messung und Bestimmung der Korrekturwerte schlichtgefräst und eine weitere Kontrollmessung durchgeführt. Anschließend werden die übrigen Schaufeln in der gleichen Weise bearbeitet.

Die Verfahrensschritte Schlichtfräsen und Nachmessen können gegebenenfalls so oft wiederholt werden, bis das gewünschte Fertigmaß erreicht ist.

Ein Ausführungsbeispiel der Erfindung wird anhand der Zeichnung, in der
- Fig. 1: eine Teilansicht eines Verdichterrotors während der Bearbeitung der Schaufelspitzen mit einem Konusfräser;
- Fig. 2: eine vergrößerte Draufsicht auf einzelne Schau- feln einer Stufe; und
- Fig. 3: eine schematische Schnittansicht von drei unter- schiedlichen Schaufelgeometrien
zeigt, näher erläutert.

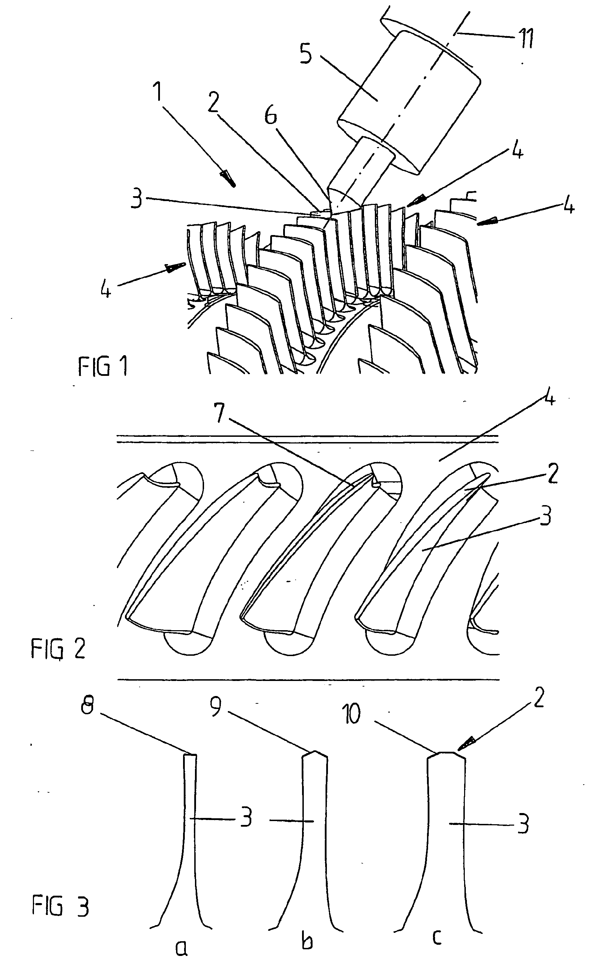

Fig. 1 zeigt ein Teilstück eines in BLISK-Bauweise ausgebildeten Verdichterrotors 1 einer Fluggasturbine während der Bearbeitung der Schaufelspitzen 2 der Schaufeln 3 einer Stufe 4 durch fünfachsiges Fräsen mit einem Konusfräser 5 unter Einsatz eines Kühlschmierstoffs. Der Konusfräser 5 hat einen zwischen 30° und 150° liegenden Spitzenwinkel und einen zwischen 0° und 60° liegenden Drallwinkel. Nach dem Aufspannen der Verdichtertrommel in einer Aufspannvorrichtung wird deren Position und Nulllage direkt in der Werkzeugmaschine mit einem optischen Messsystem ermittelt. Anschließend werden die Schaufelspitzen 2 vorgefräst und danach erneut vermessen und die Korrekturwerte für das anschließende, aufeinander folgende Schlichtfräsen der einzelnen Schaufelspitzen 2 bestimmt. Während der Bearbeitung wird der Konusfräser 5 so geführt, dass dessen Werkzeugschneide 6 stets tangential zur Außenmantelfläche der jeweiligen Stufe 4 des Verdichterrotors 1 ausgerichtet ist. (Die Werkzeugachse ist in der normalen Richtung - in der Projektionsebene tangential zur Außenmantelfläche des Verdichterrotors gesehen - ausgerichtet.) Nach dem Schlichtfräsen wird der Schaufelspitzendurchmesser erneut gemessen und das Schlichtfräsen und anschließende Vermessen gegebenenfalls wiederholt.

Das Fräsen erfolgt in der Regel entlang der - in Fig. 2 gezeigten - Mittellinie 7 der Schaufelspitze 2, wobei die Schnittkraft immer senkrecht zur Werkzeugachse 11 und in die steifeste Richtung der Schaufel 3 eingeleitet wird. In diesem Fall wird die in Fig. 3a dargestellte - ebene oder lineare - Schaufelspitzengeometrie 8 erzielt. Bei einem geringen Versatz der Werkzeugbahn von der Mittellinie 7 kann auch eine rampenförmige (Fig. 3b) oder eine facettierte (Fig. 3c) Schaufelspitzengeometrie 9 bzw. 10 gefräst werden.

Das Vorfräsen und Schlichtfräsen kann - wie oben beschrieben - jeweils als Komplettbearbeitung der betreffenden Stufe 4, d.h. erst Vorfräsen dann Schlichtfräsen der gesamten Stufe, oder auch Schaufel für Schaufel in der jeweiligen Stufe durchgeführt werden. Neben der Neuanfertigung ist auch die Reparatur einzelner Stufen oder Schaufeln einer Verdichtertrommel möglich.

Aufgrund der nicht erforderlichen Dämpfungsvorrichtungen oder eingegossenen Dämpfungsmittel ist das beschriebene Verfahren gegenüber dem bisher eingesetzten Schleifverfahren deutlich weniger zeit- und kostenaufwendig. Bei der Bearbeitung in einem Dreh-Fräs-Zentrum kann die Herstellung von Bezugsflächen, Bezugsdurchmesser und Schaufelspitzendurchmesser in ein und derselben Aufspannung erfolgen, so dass eine verbesserte Maßgenauigkeit erzielt und die Durchlaufzeit weiter verringert werden kann.

### Bezugszeichenliste

- 1: Verdichterrotor, Verdichtertrommel
- 2: Schaufelspitzen
- 3: Schaufeln
- 4: Stufe, Verdichterstufe
- 5: Konusfräser
- 6: Werkzeugschneide
- 7: Mittellinie v. 2
- 8: lineare Schaufelspitzengeometrie
- 9: rampenförmige Schaufelspitzengeometrie
- 10: facettenartige Schaufelspitzengeometrie
- 11: Werkzeugachse

## Patentansprüche

1. Verfahren zur Herstellung der Schaufelspitzen von in BLISK-Bauweise gefertigten Laufrädern, insbesondere von mehrstufigen Verdichterrotoren (1) für Fluggasturbinen, **dadurch gekennzeichnet, dass** das in einer Aufspannvorrichtung aufgespannte Laufrad oder ein Verdichterrotor (1) an den Schaufelspitzen (2) mit einem Konusfräser (5) bearbeitet wird, dessen Werkzeugschneide (6) tangential zur Außenmantelfläche des Laufrades oder Verdichterrotors (1) und an der Schaufelspitze (2) im Wesentlichen entlang von deren Mittellinie (7) geführt ist, wobei die Schnittkraft senkrecht zur Werkzeugachse (11) und in die steifeste Richtung der Schaufel (3) entsprechend dem Verlauf der Mittellinie (7) und der zu dieser senkrechten Achse eingeleitet wird.

2. Verfahren nach Anspruch 1, **dadurch gekennzeichnet, dass** die Schaufelgeometrie in Abhängigkeit von der Schaufeldicke und dem Verlauf der Werkzeugbahn in Bezug auf die Mittellinie (7) linear, rampen- oder facettenförmig ausgebildet wird.

3. Verfahren nach Anspruch 1, **dadurch gekennzeichnet, dass** der Spitzenwinkel des Konusfräsers (5) zwischen 30° und 150° und dessen Drallwinkel zwischen 0° Und 60° beträgt.

4. Verfahren nach Anspruch 1, **dadurch gekennzeichnet, dass** die Schaufelspitzenbearbeitung unter Verwendung eines Kühlschmierstoffs durchgeführt wird.

5. Verfahren nach Anspruch 1, **dadurch gekennzeichnet, dass** nach dem Aufspannen des Laufrades oder Verdichterrotors mit einer Messvorrichtung zunächst die Position und Nulllage des Werkstückes ermittelt und anschließend alle Schaufelspitzen (2) nacheinander zunächst vorgefräst werden und nach einer anschließenden erneuten Messung und Ermittlung der Korrekturwerte ein Schlichtfräsen der Schaufelspitzen und anschließend eine erneute Kontrollmessung durchgeführt wird.

6. Verfahren nach Anspruch 1, **dadurch gekennzeichnet, dass** nach dem Aufspannen des Laufrades oder Verdichterrotors mit einer Messvorrichtung zunächst die Position und Nulllage des Werkstückes ermittelt und anschließend eine Schaufelspitze vorgefräst und dieselbe Schaufelspitze nach Messung und Bestimmung der Korrekturwerte schlichtgefräst und danach eine Kontrollmessung durchgeführt wird und anschließend die übrigen Schaufeln in der gleichen Weise bearbeitet werden.

7. Verfahren nach Anspruch 5 oder 6, **dadurch gekennzeichnet, dass** das Schlichtfräsen und Nachmessen ge- gebenenfalls bis zur Erzielung des gewünschten Fertigmaßes wiederholt wird.

## Claims

1. Method for the manufacture of the blade tips of rotor wheels made in BLISK design, in particular of multi-stage compressor rotors (1) for aircraft gas turbines, **characterized in that** the rotor wheel restrained in a clamping fixture or a compressor rotor (1) is machined at the blade tips (2) by means of a conical cutter (5), whose cutting edge (6) is oriented tangentially to the outside surface of the rotor wheel or the compressor rotor (1) and routed on the blade tip (2) essentially along the centerline (7) thereof, with the cutting force being introduced vertically to the tool axis (11) and in the stiffest direction of the blade (3) in accordance with the course of the centerline (7) and the axis vertical to the latter.

2. Method in accordance with Claim 1, **characterized in that** the blade geometry, in dependence of the blade thickness and the course of the tool path in relation to the centerline (7) is linear, ramp-like or faceted.

3. Method in accordance with Claim 1, **characterized in that** the tip angle of the conical cutter (5) is between 30° and 150° and its helix angle between 0° and 60°.

4. Method in accordance with Claim 1, **characterized in that** blade tip machining is performed using a coolant-lubricant.

5. Method in accordance with Claim 1, **characterized in that** upon clamping the rotor wheel or the compressor rotor, the position and zero position of the workpiece are first determined using a measuring device, then all blade tips (2) initially rough-milled one after the other and, upon subsequent dimensional re-inspection and determination of the correction values, finish-milled with a further check measurement being taken thereafter.

6. Method in accordance with Claim 1, **characterized in that** upon clamping the rotor wheel or the compressor rotor, the position and zero position of the workpiece are first determined using a measuring device, then a blade tip is rough-milled and, upon dimensional inspection and determination of the correction values, the same blade tip is finish-milled and a check measurement is taken thereafter. Subsequently, the remaining blades are processed in the same way.

7. Method in accordance with Claim 5 or 6, **characterized in that** the process steps finish-milling and dimensional re-inspection are repeated, if required, until the desired finish dimension is obtained.

## Revendications

1. Procédé de fabrication de bouts d'aube de roues de rotors de conception BLISK, en particulier de rotors de compresseurs polyétagés (1) pour turbines à gaz aéronautiques, **caractérisé en ce que** la roue de rotor fixée dans un dispositif de fixation ou un rotor de compresseur (1) est usiné(e) sur les bouts d'aube (2) avec une fraise conique (5) dont le tranchant d'outil (6) est guidé tangentiellement à la surface de l'enveloppe extérieure de la roue de rotor ou du rotor de compresseur (1) et, sur le bout d'aube (2), essentiellement le long de la ligne médiane (7) de celui-ci, sachant que l'effort de coupe est appliqué perpendiculairement à l'axe de l'outil (11) et dans la direction de plus grande rigidité de l'aube (3) correspondant au tracé de la ligne médiane (7) et à l'axe perpendiculaire à celle-ci.

2. Procédé selon la revendication n° 1, **caractérisé en ce que** la géométrie de l'aube est configurée de manière linéaire, en rampe ou en facettes en fonction de l'épaisseur de l'aube et du tracé de la trajectoire de l'outil par rapport à la ligne médiane (7).

3. Procédé selon la revendication n° 1, **caractérisé en ce que** l'angle de pointe de la fraise conique (5) est compris entre 30° et 150° et son angle d'hélice entre 0° et 60°.

4. Procédé selon la revendication n° 1, **caractérisé en ce que** l'usinage des bouts d'aube est effectué en utilisant un réfrigérant lubrifiant.

5. Procédé selon la revendication n° 1, **caractérisé en ce qu'**après la fixation de la roue de rotor ou du rotor de compresseur, sont tout d'abord déterminés la position et le point zéro de la pièce d'oeuvre avec un appareil de mesure, puis tous les bouts d'aube (2) sont successivement dégrossis à la fraise, et après une nouvelle mesure et détermination des valeurs correctives, un fraisage de finition des bouts d'aube puis une nouvelle mesure de contrôle sont effectués.

6. Procédé selon la revendication n° 1, **caractérisé en ce qu'**après la fixation de la roue de rotor ou du rotor de compresseur, sont tout d'abord déterminés la position et le point zéro de la pièce d'oeuvre avec un appareil de mesure, puis un bout d'aube est dégrossi à la fraise, et le même bout d'aube est fini à la fraise après mesure et détermination des valeurs correctives, et ensuite une mesure de contrôle est effectuée. Puis les aubes restantes sont usinées de la même manière.

7. Procédé selon la revendication n° 5 ou n° 6, **caractérisé en ce que** le cas échéant, le fraisage de finition et la mesure qui s'ensuit sont réitérés jusqu'à obtenir la cote finie souhaitée.
